# EUROPÄISCHE PATENTSCHRIFT

(11) **EP 1 360 375 B1**
(45) Veröffentlichungstag und Bekanntmachung des Hinweises auf die Patenterteilung: **11.05.2011**
(21) Anmeldenummer: 01974300.4
(22) Anmeldetag: 26.09.2001
(51) Int. Cl.: E01C 5/06

(54) **BODENBELAGELEMENTE AUS KUNSTSTEINMATERIAL-**
ARTIFICIAL STONE FLOOR ELEMENTS
ELEMENTS DE REVETEMENT DE SOL EN PIERRE ARTIFICIELLE

(30) Priorität: 05.02.2001 DE 10105055
(43) Veröffentlichungstag der Anmeldung: 12.11.2003
(73) Patentinhaber: UNI-International Bausysteme GmbH & Co., D-76473 Iffezheim (DE)
(72) Erfinder: DROST, Andreas, 76135 Karlsruhe (DE); SCHMITZ, Michael, 77836 Rheinmünster (DE)
(74) Vertreter: Klunker . Schmitt-Nilson . Hirsch
(86) Internationale Anmeldenummer: PCT/EP2001/011151
(87) Internationale Veröffentlichungsnummer: WO 2002/063100

(56) Entgegenhaltungen:
- EP-A- 0 927 792
- US-A- 4 773 790

## Beschreibung

Die Erfindung bezieht sich auf ein Bodenbelagelement aus Kunststeinmaterial mit einer Grundform, die der Vereinigung mehrerer quadratischer Grundelemente entspricht, insbesondere winkelförmiges Bodenbelagelement, aufweisend Vorsprünge und Rücksprünge ringsum am Umfang, wobei an allen Umfangs-Grundelementseiten - von dem Zentrum der betreffenden Grundelement-Oberseite her gesehen - im wesentlichen die gleiche Profilierung vorgesehen ist, die im wesentlichen punktsymmetrisch zu ihrem Halbierungspunkt ist.

Grundelemente dieser Art, auch winkelförmige Bodenbelagelemente, sind bekannt (US 4 773 790 A).

Der Erfindung liegt die Aufgabe zugrunde, die Ausbildung der Profilierung gezielt zur Erreichung eines guten Kompromisses zwischen Verzahnungswirkung bei nicht perfekter gegenseitiger Ausrichtung von benachbarten Bodenbelagelementen und Festigkeit des Verzahnungseingriffs zwischen benachbarten Bodenbelagelementen auszubilden.

Zur Lösung dieser Aufgabe ist das genannte Bodenbelagelement dadurch gekennzeichnet, daß diese Profilierung aus drei Vorsprüngen und drei Rücksprüngen besteht; und daß bei dieser Profilierung der mittlere Vorsprung und der mittlere Rücksprung jeweils wesentlich breiter sind als die zwei anderen Vorsprünge bzw. Rücksprünge.

Weiter unten wird noch genauer ausgeführt, daß die erfindungsgemäße Ausbildung der Profilierung zu einem optimalen Kompromiß im Sinne der genannten Aufgabe führt, wobei der Kompromiß im Vergleich zu "Profilierung aus drei Vorsprüngen und drei Rücksprüngen, wobei die Vorsprünge und die Rücksprünge alle gleich breit sind" nochmals verbessert ist.

Aus EP 0 927 792 A2 ist ein Bodenbelagelement mit einer Grundform, die der Vereinigung mehrerer quadratischer Grundelemente entspricht, bekannt. An einigen, aber nicht allen, Grundelementseiten sind drei Vorsprünge vorgesehen. Die durch die drei Vorsprünge gebildete Profilierung ist nicht im wesentlichen punktsymmetrisch zum Halbierungspunkt der betreffenden Grundelementseite.

Aus der WO 98/32925 A1 ist ein Bodenbelagelement mit einer Grundform, die der Vereinigung mehrerer quadratischer Grundelemente entspricht, bekannt. An den Grundelementseiten sind zwei Vorsprünge und ein Rücksprung vorgesehen. Wenn man ein quadratisches Bodenbelagelement betrachtet, das aus vier Grundelementen vereinigt ist, existiert eine Ausführungsform mit drei, untereinander gleich breiten Vorsprüngen an jeder Bodenbelagelement-Seite (aber nicht an jeder Grundelementseite). Die aus drei Vorsprüngen gebildete Profilierung ist nicht im wesentlichen punktsymmetrisch zum Halbierungspunkt der betreffenden Bodenbelagelement-Seite.

Das genannte "Kunststeinmaterial" ist in den meisten Fällen Beton. Als weitere bevorzugte. Möglichkeit seien ziegelsteinartige Materialien genannt. Es kommen generell auch alle Materialien in Betracht, bei denen Zuschlag- oder Füllstoffe in zeitabhängig aushärtenden Bindemitteln (z. B. auch Kunststoff) eingelagert sind, insbesondere Polymerbeton. Die Worte "im wesentlichen" wurden mit Bedacht eingefügt, da in den meisten Fällen die Profilierung nicht im strengen Sinn an allen Umfangs-Grundelementseiten gleich ist und da die Punktsymmetrie in den meisten Fällen nicht im strengen Sinn verwirklicht ist. Bodenbelagelemente aus Kunststeinmaterial werden mit so großen Herstellungstoleranzen gefertigt, daß schon aus diesem Grunde keine exakt gleichen Profilierungen und keine exakte Punktsymmetrie herstellbar sind. Ferner nimmt man recht häufig mit Absicht an bestimmten Stellen des Bodenbelagelements kleinere Maßabänderungen vor, z. B. um einer Eckabschrägung Rechnung zu tragen oder einer Zurücknahme eines Umfangsbereichs zur Erzeugung von Freiraum für eine Verlegefuge Rechnung zu tragen, so daß unter diesem Gesichtspunkt die Worte "im wesentlichen sinnvoll sind. Schließlich kann es vernünftig sein, z. B. die Vorsprünge etwas schmaler (gemessen in der Verlaufsrichtung der Grundelementseite) als die beim Eingriff komplementären Rücksprünge zu machen, um eine Verlegefuge zwischen benachbart verlegten Bodenbelagelementen zu schaffen. Ganz analoge Gesichtspunkte gelten, wenn die Worte "im wesentlichen" in der nachfolgenden Beschreibung und in der Gesamtheit der Patentansprüche benutzt werden.

In den Patentansprüchen und in der Beschreibung der vorliegenden Patentschrift werden an vielen Stellen Aussagen über geometrische Verhältnisse gemacht, z. B. "quadratisches Grundelement", "winkelförmiges Bodenbelagelement", "Vorsprung", "Rücksprung", "Profillerung", "breit", "trapezförmig". Alle derartigen Aussagen beziehen sich auf eine Betrachtung des Bodenbelagelements in der Draufsicht, d. h. Blick von oben auf die Nutzseite bzw. Oberseite des betreffenden Bodenbeiagelements, als wenn dieses auf einer Unterlage verlegt wäre, sofern nicht ausdrücklich an der betreffenden Stelle etwas anderes ausgesagt ist. Vorzugsweise handelt es sich bei dem erfindungsgemäßen Bodenbelagelement um ein Bodenbelagelement, das für die Erstellung von Bodenbelägen "im Außenbereich" bzw. für die Belegung von Flächen im Freien vorgesehen ist Als besonders bevorzugtes Einsatzgebiet des erfindungsgemäßen Bodenbelagelements werden Verkehrsflächen, insbesondere solche im Freien genannt, wie z. B. Flächen für Kraftfahrzeugverkehr, Flächen für Fahrradverkehr, Flächen für Fußgängerverkehr. Besonders typisch und bevorzugt sind Plätze, Höfe, Einfahrten, Wege, Straßen, Fußgängerzonen, Ladezonen, Terrassen, Parkbereiche für Fahrzeuge, Tankstellen, gewerbliche befahrene Flächen, industrielle befahrene Flächen, Werkshöfe, Containerplätze.

Vorzugsweise sind die Vorsprünge und die Rücksprünge trapezförmig, was leicht herstellbar ist und für die Scherfestigkeit der Vorsprünge günstig ist Als Alternative ist bevorzugt, wenn die Vorsprünge und die Rücksprünge jeweils durch eine mindestens zum Teil gerundete Linie begrenzt sind, z. B. halbkreisartig mit gerundetem Übergang links und rechts. Generell sei angemerkt, daß es für die geometrische Gestaltung der Vorsprünge und der Rücksprünge eine große Vielzahl von Möglichkeiten gibt.

Vorzugsweise sind der mittlere Vorsprung und der mittlere Rücksprung jeweils mindestens 1,5 mal so breit wie die anderen Vorsprünge bzw. Rücksprünge, noch mehr bevorzugt mindestens 1,8 mal so breit, und schließlich noch mehr bevorzugt mindestens 2,0 mal so breit.

Vorzugsweise weist das Bodenbelagelement am Umfang Abstandshalte-Vorsprünge auf, wobei diese bei der Betrachtung der in den Patentansprüchen angesprochenen geometrischen Verhältnisse unberücksichtigt bleiben. Es wird allerdings darauf aufmerksam gemacht, dass es auch Ausführungen gibt, bei denen trotz der Abstandshalte-Vorsprünge die in den Patentansprüchen angesprochenen geometrischen Verhältnisse erhalten bleiben. Durch die Abstandshalte-Vorsprünge erhält man Bodenbelagelemente, die sich besonders bequem mit gleichbleibender Verlegefugenbreite (gemessen quer zur generellen Verlaufsrichtung der Umfangs-Grundelementseite) verlegen lassen.

Die Erfindung und bevorzugte Ausgestaltungen der Erfindung werden nachfolgend anhand zeichnerisch dargestellter Ausführungsbeispiele noch näher erläutert. Es zeigt:
Fig. 1 ein winkelförmiges Bodenbelagelement;
Fig. 2a bis d jeweils in weggebrochener Darstellung den Anlagebereich zweier benachbarter Bodenbelagelemente;
Fig.3 ein gegenüber Fig. 1 abgewandeltes Bodenbelagelement in zweiter Ausführungsform, wobei Teilbereiche weggebrochen sind;
Fig. 4 einen Teil eines Umfangs eines Bodenbelagelements.

Alle Zeichnungsfiguren sind Draufsichten.

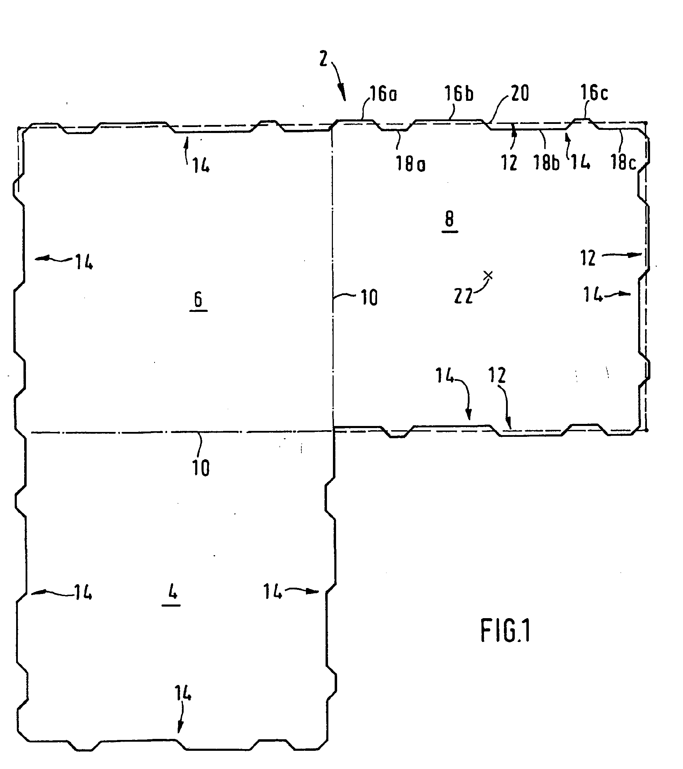

In Fig. 1 ist ein winkelförmiges Bodenbeiagelement 2 dargestellt. Nachfolgend wird der Kürze halber durchgehend von "Belagelement" statt von "Bodenbetagelement" gesprochen. Alle dargestellten Belagelemente bestehen vorzugsweise aus Beton.

Die Konfiguration des Belagelements 2 kann man sich am leichtesten dadurch veranschaulichen, daß man zunächst von einer "Grundform" spricht. Diese Grundform ist bei dem Belagelement 2 der Figur 1 durch Vereinigung von drei quadratischen Grundelementen 4, 6, 8 gebildet. Die Vereinigungslinien 10 der drei Grundelemente 4, 6, 8 sind mit strichpunktierten Unien 10 eingezeichnet. Somit hat das Grundelement 4 drei Umfangs-Grundelementseiten 12, das Grundelement 6 zwei Umfangs-Grundelementseiten 12, und das Grundelement 8 drei Umfangs-Grundelementseiten 12. Bei dem Grundelement 8 sind die drei Umfangs-Grundelementseiten 12 in unterbrochenen Linien eingezeichnet. Wenn man diese drei Umfangs-Grundelementseiten und die zu dem Grundelement 8 gehörende Vereinigungslinie 10 zusammen sieht, erkennt man unmittelbar anschaulich das Grundelement-Quadrat.

Es wird zunächst weiter das Grundelement 8 betrachtet:
An jeder der drei Umfangs-Grundelementseiten 12 ist eine Profilierung 14 vorgesehen, die aus. Vorsprüngen 16 und Rücksprüngen 18 aufgebaut ist Die jeweilige Umfangs-Grundelementseite 12 stellt gleichsam eine neutrale Linie dar, gegenüber der die Vorsprünge 16 nach außen hin vorspringen und gegenüber der die Rücksprünge 18 nach innen hin zurückspringen.

Wir beginnen mit der Betrachtung der in Fig. 1 oberen, insgesamt gesehen waagerecht verlaufenden Profilierung 14 des Grundelements 8. Ausgehend vom linken Ende der betrachteten Grundelementseite 12 beginnt die Profilierung 14 mit einem Vorsprung 16a, dann folgt ein Rücksprung 18a, dann folgt ein Vorsprung 16b, dann folgt ein Rücksprung 18b, dann folgt ein Vorsprung 16c, und dann folgt ein bis zum rechten Ende der Grundelementseite 12 ein Rücksprung 18c. Alle Vorsprünge 16a bis c und alle Rücksprünge 18a bis c sind trapezförmig, d. h. sie beginnen mit einer etwas breiteren Basis an der geraden Grundelementseite 12 und verjüngen sich zum freien Ende bzw. zum Grund hin. Die Vorsprünge 16 und die Rücksprünge 18 schließen lückenlos aneinander an. Die den Enden der Grundelementseite 12 näheren Vorsprünge 16a und 16c und die den Enden der Grundelementseite 12 näheren Rücksprünge 18a und 18c sind alle untereinander im wesentlichen gleich breit (gemessen an der Grundelementseite 12 = Neutrallinie). Der von den Enden der Grundelementseite 12 weiter entfernte Vorsprung 16b und der von den Enden der Grundelementseite 12 weiter entfernte Rücksprung 18b sind untereinander gleich breit und jeweils etwa doppelt so breit wie jeder der Vorsprünge 16a und 16c bzw. jeder der Rücksprünge 18a und 18c. Die Worte "im wesentlichen" und "etwa" sind bewußt eingefügt worden , weil - aus weiter unten noch genauer darzulegenden Gründen - die angesprochenen Maßbeziehungen nicht exakt zu verstehen sind. So ist z. B. der Vorsprung 16a durchaus ein wenig breiter als der Vorsprung 16c. Umgekehrt ist der Rücksprung 18c durchaus ein wenig breiter als der Rücksprung 18a; außerdem ist die Ecke des Belagelements. 2 am rechten Ende des Rücksprungs 18c mit einer kleinen Fase abgeschrägt. Schließlich wird darauf hingewiesen, daß bei Betonprodukten wie dem gezeichneten Belagelement 2 aufgrund der Toleranzen der Herstellungsform und aufgrund des keine besonders glatten Flächen liefernden Materials Maßangaben und Maßrelationen sowieso nicht als exakt zu verstehen sind. Ein besonders relevanter Gesichtspunkt, der zu einer Breitenvariation bei den Vorsprüngen 16 und den Rücksprüngen 18 führt, ist das Faktum, daß man an den Umfangsseiten des Belagelements 2, wo beim nebeneinander Verlegen mehrerer Belagelemente 2 ein Nachbar-Belagelement anschließt, eine Verlegefuge z. B. mit einer Breite von 3 bis 5mm behält, während es an der Vereinigungslinie 10 keine Verlegefuge gibt. Um in dieser Hinsicht einen gewissen Ausgleich zu schaffen, wird der gleichsam mathematische Ausgangsentwurf der Profilierung 14 hinsichtlich der Breiten der Vorsprünge 16 und der Rücksprünge 18 sowie hinsichtlich der Positionierung der Vorsprünge 16 und der Rücksprünge 18 leicht modifiziert.

Die betrachtete Profilierung 14 ist im wesentlichen punktsymmetrisch zu ihrem Halbierungspunkt 20, d. h., wenn man die linke Profilierungshälfte um 180° in der Zeichnungsebene der Fig. 1 dreht, fällt sie mit der rechten Profilierungshälfte zusammen. Die Worte "im wesentlichen" sind aus Gründen eingefügt, die den vorstehend dargelegten Gründen analog sind.

Es wird betont, daß die beschriebene Profilierung 14 auch "umgedreht", d.h. geklappt um 180° zum eine in der Zeichnungsebene liegende Halbierungslinie, ausgebildet sein könnte; d.h. linkes Ende und rechtes Ende vertauscht. Dann würde die Profilierung 14 links mit einem ersten Rücksprung beginnen.

Die angesprochenen Breiten der Vorsprünge 16 und Rücksprünge 18 werden an der Neutrallinie 12 gemessen. Dies ist in der Regel bei dem erfindungsgemäßen Belagelement 2 die sinnvollste Stelle.

Es wird darauf hingewiesen, daß die Trapezform der Vorsprünge 16 und der Rücksprünge 18 nur eines von vielen möglichen Ausführungsbeispielen ist Man könnte stattdessen z. B. eine Rechteckform (die aber schwieriger herzustellen ist) oder eine weiter vorspringende bzw. weiter zurückspringende Form z. B. in Gestalt eines niedrigen Dreiecks wählen. An jeder der drei Umfangs-Grundelementseiten 12 ist die Profilierung 14, von dem Zentrum 22 des betrachteten Grundelement aus gesehen, gleich, d. h. wenn man die zuerst betrachtete, obere Profilierung 14 im Uhrzeigersinn um 90° um das Zentrum 22 dreht, geht sie im wesentlichen in die in Fig. 1 rechte, insgesamt gesehen vertikal verlaufende Profilierung 14 über, und wenn man die obere Profilierung 14 um 180° um das Zentrum 22 dreht, geht sie im wesentlichen in die Fig. 1 untere, insgesamt waagerecht verlaufende Profilierung 14 des betrachteten Grundelements 8 über. Zur Einfügung der Worte "im wesentlichen" siehe die Ausführungen weiter oben. Infolge der angesprochenen Punktsymmetrie jeder Profilierung 14 bezogen auf den Halbierungspunkt 20 ist die untere Profilierung 14 im wesentlichen eine Parallelverschiebung der oberen Profilierung 14.

Alles bisher zu den Profilierungen 14 Dargelegte gilt in entsprechender Weise für die Grundelemente 4 und 6, wobei das Grundelement 6 naturgemäß nur zwei Umfangs-Grundelementseiten und damit nur zwei Profilierungen 14 besitzt, die insgesamt gleichsam rechtwinklig zueinander verlaufen.

Die beschriebene Geometrie der Profilierungen. 14 führt dazu, daß an das in Fig. 1 gezeichnete Belagelement 2 benachbarte Belagelemente angelegt werden können, und zwar entweder in der gleichen Orientierung oder in um 90° (im Uhrzeigersinn oder gegen den Uhrzeigersinn) gedrehter Orientierung oder in um 180° gedrehter Orientierung. Die Profilierungen 14 benachbarter Belagelement 2 passen (mit etwas "Luft" dazwischen) immer komplementär zusammen; es findet eine gegenseitige Verzahnung oder Verankerung der benachbarten Belagelemente 2 statt, und zwar zusätzlich zu der gegenseitigen Verankerung benachbarter Belagelement 2 im verlegten Verband, die durch die Winkelform des gezeichneten Belagelements 2 erzielt wird.

Es wird darauf hingewiesen, daß erfindungsgemäße Belagelemente 2 zwar eine Grundform haben sollen, die der Vereinigung mehrerer quadratischer Grundelemente entspricht, daß aber die Anzahl der Grundelemente und die Ausrichtung der Vereinigung wählbar sind. So könnte man z. B. drei Grundelemente 4, 6, 8 (oder auch zwei Grundelemente, oder auch vier Grundelemente in gerader Reihe vereinigen, oder durch Anfügen eines weiteren Grundelements rechts an das Grundelement 8 ein L-förmiges Belagelement 2 schaffen, oder durch Anfügen eines weiteren Grundelements oben an das mittlere Grundelement 6 ein T-förmiges Belagelement 2 schaffen, oder durch Anfügen eines wefteren-Grundelements oben an das mittlere Grundelement 6 sowie Anfügen eines weiteren Grundelements links an das mittlere Grundelement 6 ein kreuzförmiges Belagelement 2 schaffen, etc.

Es wird ausdrücklich betont, daß die Erfindung alternativ auch ein Bodenbelagelement schafft, dessen Grundform nur aus einem quadratischen Grundelement besteht, aber ansonsten mit den in der vorliegenden Patentschrift beschriebenen zwingenden und ggf. mit weiteren bevorzugten Merkmalen.

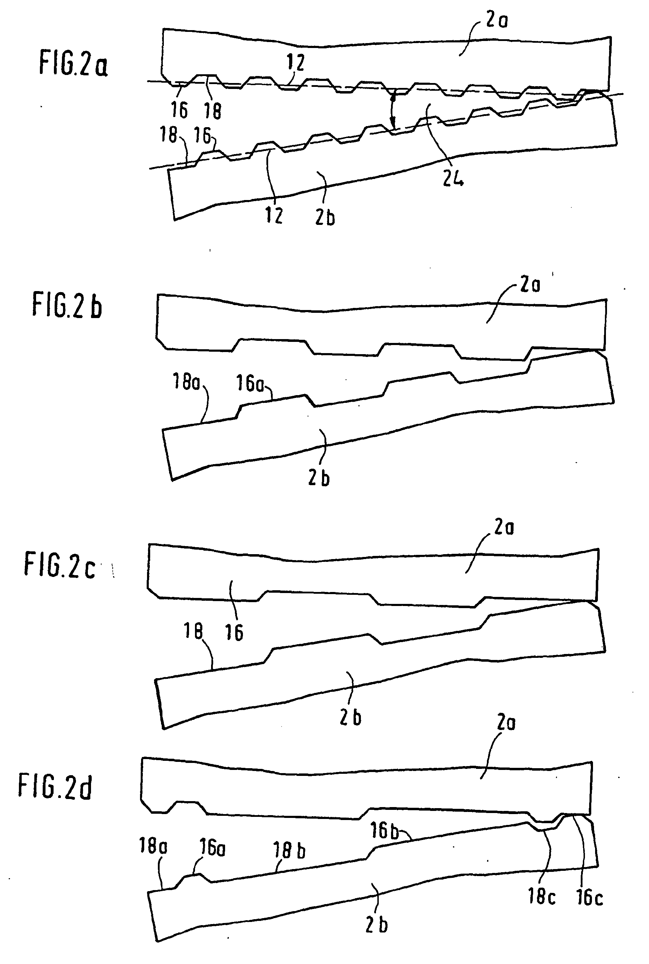

Anhand der Fig. 2a bis d wird veranschaulicht, weshalb die erfindungsgemäße Ausführung der Vorsprünge und Rücksprünge zu besonders guten Ergebnissen führt. Die Bodenbelagelemente der Fig. 2a, 2b, 2c sind nicht patentgemäß, die Bodenbelagelemente der Fig. 2d sind patentgemäß.

In jeder der Teilfiguren a bis d ist schematisiert eine Profilierung 14 einer Umfangs-Grundelementseite 12 gezeichnet. Bei Fig. 2a ist die Grundelementseite auf acht Vorsprünge 16, und acht Rücksprünge 18, die alle untereinander gleich breit sind, aufgeteilt. Bei der Teilfigur 2b ist die Grundelementseite auf drei Vorsprünge 16 und drei Rücksprünge 18, die alle untereinander gleich breit sind, aufgeteilt. Bei der Teilfigur 2c ist die Grundelementseite auf zwei Vorsprünge 16 und zwei Rücksprünge 18, die alle untereinander gleich breit sind, aufgeteilt. Die Altemative mit nur einem Vorsprung und einem Rücksprung ist nicht gezeichnet, weil sie zu einer unvollständigen Verzahnung zweier Belagelemente führt. Die Grundelementseiten 12 der zwei benachbarten Belagelement 2a und 2b verlaufen jeweils nicht parallel zueinander (wie es bei perfekter Verlegung angestrebt wird), sondern unter einem Winkel 24 relativ zueinander, wobei Winkel 24 bei allen Teilfiguren 2a bis d gleich ist.

Wenn nun zwei benachbarte Belagelemente 2a und 2b mit einer Fehlausrichtung im Sinne des angesprochenen Winkels 24 nebeneinander liegen, was durch ungenaue Verlegearbeit oder durch Verlagerung einzelner Belagelemente 2 durch Verkehrsbeanspruchung in verlegtem Zustand vorkommen kann, hat man im Fall von Fig. 2a immer noch eine Restverzahnung durch den letzten Vorsprung 16 am rechten Ende der Grundelementseite 12 des einen Belagelements 2a und einen Rücksprung 18 am korrespondierenden Ende der Grundelementseite 12 des anderen Belagelements 2b. Bei den Belagelementen 2a und 2b der Fig. 2b ist die linke Trapezseite des ganz rechten Vorsprungs 16c des Belagelements 2a und die linke Trapezseite des ganz rechte Rücksprungs-18c des Belagelements 2b ein Stück nach links gewandert, aber man hat in dieser Situation gerade eben noch eine Restverzahnung zwischen diesem Vorsprung 16c und diesem Rücksprung 18c (wenn auch mit geringerer Tiefe des formschlüssigen Engriffs). Bei den Belagelementen 2a und 2b gemäß Fig. 2c hat man in dieser Situation keine Restverzahnung mehr. Hieraus muß man die Schlußfolgerung ziehen, daß es für die Restverzahnungswirkung bei winkliger Fehlausrichtung zwischen benachbarten Belagelementen besser ist, je größer die Anzahl der Vorsprünge und Rücksprünge über eine gegebene Länge einer Grundelementseite ist.

Ein anderer Gesichtspunkt ist die Festigkeit bzw. Belastbarkeit der Verzahnung zwischen zwei benachbart verlegten Belagelementen 2a und 2b in korrekt verlegtem Zustand, d. h. zueinander parallele Grundelementseiten 12 mit so geringem Abstand voneinander wie es der üblichen Verlegfuge entspricht. Hier nimmt die Scherfestigkeit, d. h. die Belagelemente 2a und 2b werden in Richtung parallel zu den Grundelementseiten 12 in gegensinniger Richtung mit Kraft beaufschlagt, mit zunehmender Anzahl von Vorsprüngen 16 und Rücksprüngen 18 auf eine gegebene Länge der Grundelementseite 12 ab. Zum einen ist die aus den einzelnen Vorsprüngen 16 summierte Gesamt-Scherfläche mit zunehmender Vorsprungsanzahl immer kleiner (weil die Verlegefugenabschnitte zwischen den schrägen Trapezseiten nicht zur Gesamt-Scherfläche beitragen und weil dadurch ein Verlust an Gesamt-Scherfläche entsteht, daß an einer größeren Anzahl von Vorsprüngen der Scherquerschnitt nicht der Vorsprungswurzel sondern in dem gegenüber dem verjüngten Vorsprungsbereich liegt). Zum anderen hat man den Effekt, daß bei einer größeren Anzahl von Vorsprüngen bei weitem nicht alle Vorsprünge gegen Abscheren tragen, sondern erfahrungsgemäß weniger als die Hälfte. Somit spricht der Gesichtspunkt der Scherfestigkeit dafür, die Anzahl der Vorsprünge und Rücksprünge für eine gegebene Länge der Grundelementseite möglichst klein zu machen.

Durch Abwägung dieser Gesichtspunkte sind die Erfinder zu dem Schluß gekommen, daß die Anzahl von drei Vorsprüngen und von drei Rücksprüngen den optimalen Kompromiß zwischen Restverzahnungswirkung bei Winketfehtausrichtung und hoher Scherfestigkeit darstellt und daß dieser Kompromiß nochmals besser, wird wenn die jeweils den Enden der Grundelementseite näheren Paare von Vorsprung 16a und Rücksprung 18a bzw. Vorsprung 16c und Rücksprung 18c weniger breit sind als das dazwischen angeordnete Paar von Vorsprung 16b und Rücksprung 18b, siehe Fig. 2d.

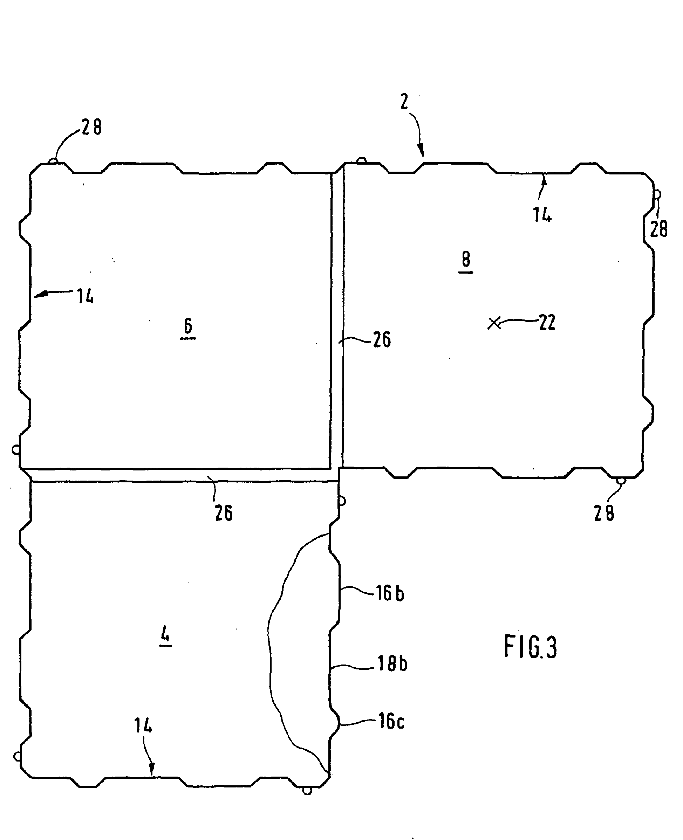

Die Ausführungsform eines Belagelement 2 gemäß Fig. 3 unterscheidet sich von der Ausführungsform gemäß Fig. 1 dadurch, daß dort, wo in Fig. 1 die Vereinigungslinien 10 eingezeichnet waren, geradlinige Scheinfugen 26 verlaufen. Als Scheinfugen werden Fugen bezeichnet, die sich nur bis zu einer bestimmten Tiefe von z. B. 5 mm von der Oberseite nach unten in das Belagelement 2 erstrecken. Die Scheinfugen 26 ergeben eine optische Unterteilung des Belagelement 2 in drei Teil-Belagelemente, die abgesehen von den Profilierungen 14 den drei Grundelementen 4, 6, 8 entsprechen. Quer zu ihrer Erstreckungsrichtung gemessen haben die Scheinfugen 26 eine Breite, die im wesentlichen der Höhe der Vorsprünge 16, gemessen gegenüber dem Grund der Rücksprünge 18, und zusätzlich der schon angesprochenen Verlegefugenbreite (diese gemessen quer zur generellen Verlaufsrichtung der Profilierung 14) entspricht. Nicht nur bei der Ausführungsform gemäß Fig. 3, sondern bei allen Ausführungsformen der Erfindung ist es möglich, daß die Oberseiten der Vorsprünge 16 gegenüber der sonstigen Oberseite des Belagelement 2 etwas abgesenkt sind, z. B. um 4 bis 8 mm. Dies hat zur Folge, daß im verlegten Belag aus mehreren Belagelementen.2 die Verzahnung zwischen zwei benachbarten Profilierungen 14 optisch weniger auffällt. Die Scheinfugen 26 stellen gleichsam eine optische Weiterführung der durch die zwei benachbarten Profilierungen 14 und die Verlegefuge dazwischen gebildeten Rinne dar.

Außerdem ist in Fig. 3 die Möglichkeit eingezeichnet, am Umfang des Belagelements 2 verteilt Abstandshalte-Vorsprünge 28 vorzusehen. Bei der gezeichneten Ausführungsform haben die Abstandshalte-Vorsprünge 28 jeweils einen halbkreisförmigen Querschnitt und sind jeweils an dem - von dem Zentrum 22 der betreffenden Grundelementoberseite her gesehen - ganz linken Vorsprung 16 der betreffenden Profilierung 14 vorgesehen. In Fig. 3 ist die Größe der Abstandshalte-Vorsprünge 28 gegenüber der natürlichen Größe vergrößert dargestellt, um die Abstandshalte-Vorsprünge überhaupt deutlich sichtbar zu machen. Die Abstandshalte-Vorsprünge 28 erleichtern das Verlegen der Belagelemente 2, weil das als nächstes zu verlegende, benachbarte Belagelement 2 einfach in körperlichen Kontakt zwischen den dortigen Abstandshalte-Vorsprüngen 28 des bereits verlegten Belagelements 2 und den dortigen Abstandshafte-Vorsprüngen 28 des neu zu verlegenden Belagelements 2 geschoben werden kann. Auf diese Weise wird eine Verlegefuge mit gleichmäßiger Breite geschaffen. Es wird betont, daß die Abstandshafte-Vorsprünge wahlweise andere Querschnittsgeometrie haben können und an anderen Stellen sitzen können als in Fig. 3 eingezeichnet. Es ist bevorzugt, daß die Abstandshalte-Vorsprünge erst ein Stück unterhalb der Belagelementaberseite beginnen und sich von dort bis ganz zur Unterseite des Belagelements 2 erstrecken. Die Abstandshalte-Vorsprünge 28 sind einstückig mit dem restlichen Belagelement 2 aus Beton gefertigt.

Schließlich ist in Fig. 3 die Möglichkeit eingezeichnet, die Vorsprünge 16 und die Rücksprünge 18 jeweils durch eine gerundete Linie (durchgehend gerundet oder stückweise gerundet und stückweise geradlinig) zu begrenzen.

Außerdem wird betont daß die Merkmale "Scheinfugen 26" und "Abstandshalte-Vorsprünge 28" nicht zwangsläufig in Kombination verwirklicht sein müssen, sondern daß man Belagelemente 2 mit mindestens einer Scheinfuge 26 und/oder mit Abstandshalte-Vorsprüngen 28 ausstatten kann. Es ist möglich, nur eine Scheinfuge 26 oder mehr als zwei Scheinfugen 26 vorzusehen, z. B. die Vereinigung der Grundelemente 6 und 8 durch zwei Scheinfugen 26 optisch in drei Teile zu untergliedern. Ferner ist es möglich, eine oder mehrere ungeradlinig verlaufende Scheinfugen vorzusehen, z. B. entsprechend dem Verlauf der Profilierung 14.

## Patentansprüche

1. Bodenbelagelement (2) aus Kunststeinmaterlal mit einer Grundform, die der Vereinigung mehrerer quadratischer Grundelemente (4; 6; 8) entspricht insbesondere winkelförmiges Bodenbelagelement (2), aufweisend Vorsprünge (16) und Rücksprünge (18) ringsum am Umfang, wobei an allen Umfangs-Grundelemontseiten (12) - von dem Zentrum (22) der betreffenden Grundelementoberseite her gesehen - im wesentlichen die gleiche Profilierung (14) vorgesehen ist, die im wesentlichen punktsymmetrisch zu ihrem Halbierungspunkt (20) ist,
**dadurch gekennzeichnet,**
**daß** diese Profilierung (14) aus drei Vorsprüngen (16) und drei Rücksprüngen (18) besteht;
und **daß** bei dieser Profilierung (14) der mittlere Vorsprung (16b) und der mittlere Rücksprung (18b) jeweils wesentlich breiter sind als die zwei anderen Vorsprünge (16a, 16b) bzw. Rücksprünge (18a, 18c) (Fig. 1; Fig. 3).

2. Bodenbelagelement nach Anspruch 1,
**dadurch gekennzeichnet,**
**daß** die Vorsprünge (16) und die Rücksprünge (18) trapezförmig sind.

3. Bodenbelagelement (2) nach Anspruch 1,
**dadurch gekennzeichnet,**
**daß** die Vorsprünge (16) und die Rücksprünge (18) jeweils durch eine mindestens zum Teil gerundete Line begrenzt sind.

4. Bodenbelagelement (2) nach einem der Ansprüche 1 bis 3,
**dadurch gekennzeichnet,**
**daß** der mittlere Vorsprung (16b) und der mittlere Rücksprung (18b) mindestens 1,5 mal so breit sind wie die zwei anderen Vorsprünge (16a, 16c) bzw. Rücksprünge (18a, 18c), vorzugsweise mindestens 1,8 mal so breit sind wie die zwei anderen Vorsprünge (16a, 16c) bzw. Rücksprünge (18a, 18c), stärker vorzugsweise mindestens 2,0 mal so breit sind wie die zwei anderen Vorsprünge (16a, 16c) bzw. Rücksprünge (18a, 18c).

5. Bodenbelagelement (2) nach einem der Ansprüche 1 bis 4,
**dadurch gekennzeichnet,**
**daß** es am Umfang Abstandshalte-VvrspNnge (28) aufweist, wobei die Abstandshalte-Vorsprünge (28) bei der Betrachtung der in den Ansprüchen 1 bis 4 angesprochenen geometrischen Verhältnisse unberücksichtigt bleiben.

6. Bodenbelagelement (2) nach einem der Ansprüche 1 bis 5,
**dadurch gekennzeichnet,**
**daß** es an seiner Oberseite mindestens eine Scheinfuge (26) aufweist, die vorzugsweise - grob gesprochen - entsprechend der Vereinigungslinie des Zusammenfassens zweier benachbarter Grundelernente (4; 6; 8) verläuft.

## Claims

1. A ground covering element (2) of artificial stone material, having a basic shape corresponding to a unification of several square basic elements (4; 6; 8), in particular an angular ground covering element (2), the ground covering element (2) comprising projections (16) and recesses (18) all around its circumference, all circumferential basic element sides (12) - as seen from the center (22) of the particular basic element upper side - having substantially the same profile (14) which is substantially point-symmetric with respect its halving point (20),
**characterized in**
**that** said profile (14) consists of three projections (16) and three recesses (18);
and in that, with respect to said profile (14), the middle projection (16b) and the middle recess (18b) each are considerably wider than the two other projections (16a, 16b) and recesses (18a, 18c), respectively (Figs. 1; Fig. 3).

2. A ground covering element according to claim 1,
**characterized in that** said projections (16) and recesses (18) are trapezoidal.

3. A ground covering element (2) according to claim 1,
**characterized in that** said projections (16) and recesses (18) are confined each by an at least partly rounded line.

4. A ground covering element (2) according to any of claims 1 to 3,
**characterized in that** the middle projection (16b) and the middle recess (18b) are at least 1.5 times as wide as the two other projections (16a, 16c) and recesses (18a, 18c), respectively, preferably at least 1.8 times as wide as the two other projections (16a, 16c) and recesses (18a, 18c), respectively, and more preferably at least 2.0 times as wide as the two other projections (16a, 16c) and recesses (18a, 18c), respectively.

5. A ground covering element (2) according to any of claims 1 to 4,
**characterized in that** it has spacer projections (28) on its circumference, with these spacer projections (28) being left disregarded in the consideration of the geometric relationships indicated in claims 1 to 4.

6. A ground covering element (2) according to any of claims 1 to 5,
**characterized in that** it has at least one dummy gap (26) on its upper side, which - roughly speaking - extends preferably in conformity with the junction line of the unification of two adjacent basic elements (4; 6; 8).

## Revendications

1. Élément de revêtement de sol (2) en pierre artificielle avec une forme de base qui correspond à la réunion de plusieurs éléments de base carrés (4 ; 6 ; 8), en particulier élément de revêtement de sol angulaire (2), présentant sur tout son périmètre des parties saillantes (16) et des parties en retrait (18), étant précisé que sur tous les côtés d'éléments de base (12) du périmètre est prévu - vu du centre (22) de la face supérieure d'élément de base concernée - globalement le même profil (14), qui présente globalement une symétrie ponctuelle par rapport à son point médian (20),
**caractérisé en ce que** ce profil (14) se compose de trois parties saillantes (16) et de trois parties en retrait (18) ;
et **en ce qu'**avec ce profil (14), la partie saillante du milieu (16b) et la partie en retrait du milieu (18b) sont globalement plus larges que les deux autres parties saillantes (16a, 16b) et parties en retrait (18a, 18c) (fig. 1 ; fig. 3).

2. Élément de revêtement de sol (2) selon la revendication 1, **caractérisé en ce que** les parties saillantes (16) et les parties en retrait (18) sont trapézoïdales.

3. Élément de revêtement de sol (2) selon la revendication 1, **caractérisé en ce que** les parties saillantes (16) et les parties en retrait (18) sont délimitées chacune par une ligne au moins en partie arrondie.

4. Élément de revêtement de sol (2) selon l'une des revendications 1 à 3, **caractérisé en ce que** la partie saillante du milieu (16b) et la partie en retrait du milieu (18b) sont au moins 1,5 fois plus larges que les deux autres parties saillantes (16a, 16c) et parties en retrait (18a, 18c), de préférence au moins 1,8 fois plus larges que les deux autres parties saillantes (16a, 16c) et parties en retrait (18a, 18c), plus spécialement au moins 2,0 fois plus larges que les deux autres parties saillantes (16a, 16c) et parties en retrait (18a, 18c).

5. Élément de revêtement de sol (2) selon l'une des revendications 1 à 4, **caractérisé en ce qu'**il présente sur 5son périmètre des saillies d'écartement (28), ces saillies d'écartement (28) restant non prises en compte quand on considère les rapports géométriques abordés dans les revendications 1 à 4.

6. Élément de revêtement de sol (2) selon l'une des revendications 1 à 5, **caractérisé en ce qu'**il présente sur sa face supérieure au moins un faux joint (26) qui s'étend de préférence - en gros - suivant la ligne de réunion pour l'assemblage de deux éléments de base (4 ; 6 ; 8) voisins.
